# EUROPEAN PATENT APPLICATION

(11) **EP 4 610 119 A1**
(43) Date of publication of application: **03.09.2025**
(21) Application number: 25159896.7
(22) Date of filing: 25.02.2025
(51) Int. Cl.: B60T 1/06, B60B 35/12, F16D 55/40, F16D 65/18

(54) **AXLE ASSEMBLY**

(30) Priority: 27.02.2024 GB 202402773
(71) Applicant: J.C. Bamford Excavators Limited, Uttoxeter Staffordshire ST14 5JP (GB)
(72) Inventor: HURD, Thomas Deckland, Uttoxeter, ST14 5JP (GB); TRIMMER, Gareth, Uttoxeter, ST14 5JP (GB); BURGESS, Lee Charles, Uttoxeter, ST14 5JP (GB); WILLIAMS, Alan, Uttoxeter, ST14 5JP (GB); AP GWYNDAF, Deio, Uttoxeter, ST14 5JP (GB); NELSON, Jonathan Francis, Uttoxeter, ST14 5JP (GB); GRIFFITHS, Connor Owen, Uttoxeter, ST14 5JP (GB)
(74) Representative: Hambley, Christopher John

(57) **Abstract**

An axle assembly 10 for a working vehicle is provided. The axle assembly comprises an axle 12 comprising a casing 14 and a driveshaft 16 located within the casing. The axle assembly also comprises a wheel hub 20 for mounting a wheel thereto, wherein the wheel hub is located at an outboard end of the axle and comprises a wheel driving element 24 which is coupled to the driveshaft by a gear arrangement. The axle assembly also comprises a brake system 28 comprising a service brake 30 configured to apply a braking force to the driveshaft, and an auxiliary brake 32 configured to apply a braking force to the wheel driving element.

## Description

### FIELD OF THE INVENTION

The present invention relates to an axle assembly, a drivetrain, a working vehicle, a brake arrangement, and a method of controlling a brake system.

### BACKGROUND OF THE INVENTION

Various brake systems are known for applying a braking force to slow and/or inhibit movement of a vehicle. One type of known brake system which is used on working vehicles is a "wet" brake. Wet brakes are positioned inside a casing filled with fluid (e.g., oil or transmission fluid). In this way, the braking components of the wet brake are lubricated and cooled with the fluid, whilst being protected from dirt, water or other contaminants outside the casing.

In one known arrangement, a wet brake is situated inside an axle casing which houses a driveshaft, and a braking force is applied directly to the driveshaft. In another known arrangement, a wet brake is situated inside a wheel hub at an end of the axle and a braking force is applied to a portion of the driveshaft situated inside the wheel hub. In a further known arrangement, a wet brake is situated inside a wheel hub and a braking force is applied to a wheel driving element which is coupled to the driveshaft by a planetary gear arrangement.

The present invention seeks to overcome, or at least mitigate, one or more problems of the prior art.

### SUMMARY OF THE INVENTION

Aspects and embodiments of the invention provide an axle assembly, a drivetrain, a working vehicle, a brake arrangement and a method of controlling a brake system as claimed in the appended claims.

An aspect of the teachings provides an axle assembly for a working vehicle. The axle assembly comprises: an axle comprising a casing and a driveshaft located within the casing; a wheel hub for mounting a wheel thereto, wherein the wheel hub is located at an outboard end of the axle and comprises a wheel driving element which is coupled to the driveshaft; and a brake system comprising a service brake configured to apply a braking force to the driveshaft, and an auxiliary brake configured to apply a braking force to the wheel driving element.

It will be understood that having the service brake configured to apply a braking force to the driveshaft may provide a greater braking capacity and/or thermal management than arrangements in which the service brake is configured to apply a braking force to a wheel driving element, because of a decreased internal volume for locating braking components and cooling fluid inside the wheel hub, compared to an inside of the casing of the axle.

However, by having an additional auxiliary brake which is configured to apply a braking force to the wheel driving element, it is possible to obtain the capacity/thermal management benefits of applying service brakes to the driveshaft, whilst mitigating rocking caused by torsion in the driveshaft and/or by backlash in any gears between the driveshaft and the wheel driving element.

Optionally, the wheel driving element is coupled to the driveshaft by a gear arrangement.

When the service brake applies a braking force to stop rotation of the driveshaft, backlash in such a gear arrangement may lead to a small amount of movement of the wheel driving element (e.g., 1 to 2 degrees of movement). This can lead to rocking of the associated working vehicle when performing certain operations, such as moving a working arm of the working vehicle, which can be felt by an operator.

Therefore, by having an additional auxiliary brake which is configured to apply a braking force to the wheel driving element, it is possible to obtain the capacity/thermal management benefits of applying service brakes to the driveshaft, whilst mitigating the disadvantages of rocking/backlash when required through use of the auxiliary brake.

Optionally, the wheel driving element comprises a wheel bearing carrier. Optionally, the gear arrangement comprises a planetary gear arrangement.

In alternative embodiments, the driveshaft is coupled directly to the wheel driving element (i.e., the gear arrangement is omitted).

Optionally, the service brake is positioned inboard of the auxiliary brake.

In other words, the axle assembly has an outboard end, and the auxiliary brake is located between the service brake and the outboard end of the axle assembly. Put another way, the service brake may be applied to an inboard portion of the driveshaft (e.g., a portion of the driveshaft proximal a differential or other transmission components).

Applying the service brake to an inboard portion of the driveshaft (where the axle casing typically has a greater internal volume and is close to lubricated components such as the differential or other transmission components), facilitates increased sizing/number of brake components to increase brake capacity. Further, this facilitates improved thermal management using cooling fluids inside the casing.

Optionally, the driveshaft is coupled to a differential, and wherein the service brake is positioned proximal to the differential.

The axle casing is typically less space-constrained close to the differential (i.e. at an inboard portion of the axle casing), compared to the outboard end. Therefore, positioning the service brake proximal to the differential facilitates increased sizing/number of brake components to increase brake capacity. Further, since differentials are typically contained within a lubricated differential casing, positioning the service brake proximal to the differential, facilitates improved thermal management using cooling fluids inside the casing.

Optionally, the brake system comprises a control system configured to apply the auxiliary brake.

Such a control system may ensure appropriate application of the auxiliary brake when required.

Optionally, the control system is configured to apply the auxiliary brake when the working vehicle is in a working mode.

It will be understood that the issue of rocking/backlash associated with applying the service brake to the driveshaft may be most noticeable by an operator when actuating a working arm of the working vehicle. Therefore, by applying the auxiliary brake when the working vehicle is in a working mode, the control system ensures that the auxiliary brake is applied at the appropriate time when needed, without requiring manual application of the auxiliary brake.

Optionally, the control system comprises a working mode input indicative of a desire to actuate a working arm of the working vehicle, and wherein the control system is configured to determine that the working vehicle is in the working mode in response to activation of the working mode input; optionally, wherein the working mode input comprises a button, switch, touchscreen or other user-selectable input located within an operator cabin of a working vehicle.

Such a working mode input provides a simple means for determining when the working vehicle is in the working mode.

Optionally, the control system is configured to apply the service brake when the working vehicle is in the working mode.

In this way, the total static braking force is the sum of the service brake torque and the auxiliary brake torque, which is greater than the auxiliary brake torque alone. Furthermore, if the auxiliary brake slips while the working vehicle is in the working mode (e.g., due to large forces produces by ground-engaging operations such as digging with the working arm), because the service brake is applied to the driveshaft, the wheel driving element cannot move more than is permitted by backlash in the gear arrangement (e.g., 1 to 2 degrees).

Optionally, the control system is configured to determine whether the driveshaft and/or wheel driving element is stationary or rotating, wherein the control system is configured to inhibit application of the auxiliary brake when the driveshaft and/or wheel driving element is rotating.

In other words, the control system is configured to inhibit "dynamic braking" with the auxiliary brake. It will be understood that dynamic braking produces more debris and heat than static braking, due to relative rotation between engaged brake components. Therefore, the control system inhibiting dynamic braking with the auxiliary brake reduces build-up of debris and heat in the auxiliary brake, which extends the lifetime of the auxiliary brake.

Optionally, when the driveshaft and/or wheel driving element is determined to be stationary, the control system is configured to continue to inhibit application of the auxiliary brake until a predetermined amount of time has elapsed.

This may further safeguard against dynamic braking with the auxiliary brake, by ensuring that the auxiliary brake is not applied prematurely (e.g., momentarily when the driveshaft and/or wheel driving element is stationary when switching between forwards and reverse driving of the associated working vehicle).

Optionally, the predetermined amount of time is at least 0.5 seconds.

Optionally, when the driveshaft and/or wheel driving element is determined to be stationary, the control system is configured to apply the auxiliary brake.

This may be useful for increasing braking capacity and/or inhibiting rocking, for example, when the working vehicle is temporarily stationary whilst in a travelling mode (e.g., when waiting at traffic lights).

Optionally, the braking system comprises a service brake input for applying the service brake. Optionally, the service brake input comprises a brake pedal or lever in an operator cabin of a working vehicle.

Such a service brake input allows an operator to control operation of the service brake (e.g., when wanting to decelerate in a travelling mode of the working vehicle).

Optionally, the service brake is configured to apply a maximum service brake torque to the driveshaft, and the auxiliary brake is configured to apply a maximum auxiliary brake torque to the wheel driving element, wherein the maximum service brake torque is greater than the maximum auxiliary brake torque.

Optionally, the maximum auxiliary brake torque is in the range of 2000 to 8000 Nm, optionally 3000 to 7000 Nm, optionally 4000 to 6000 Nm.

It will be understood that the service brake may be used for both "dynamic braking" (i.e., to decelerate a moving working vehicle) and "static braking" (i.e., to prevent a static working vehicle from moving). It will also be understood that the issue of rocking/backlash associated with applying a service brake to the driveshaft is only relevant when the driveshaft is static. Therefore, the auxiliary brake only needs to be applied to the wheel driving element to inhibit rocking/backlash during static braking of the working vehicle. Since static braking generally has a lower brake torque requirement than dynamic braking, the auxiliary brake can be downsized compared to the service brake (i.e., so that it provides a lower brake torque), which results in a more compact auxiliary brake which can fit more easily inside a space-constrained wheel hub.

Optionally, the maximum service brake torque is greater than 8000 Nm, optionally greater than 10000 Nm, optionally greater than 12000 Nm.

Optionally, the auxiliary brake comprises a wet brake.

In other words, the auxiliary brake is enclosed within a fluid-filled portion of the wheel hub. Wet brakes are particularly suitable for working vehicles because the surrounding fluid can both lubricate and cool the brake components which extends the lifetime of the braking components. The fluid inside the wet brakes may also enhance friction and noise characteristics of the brake. Furthermore, wet brakes are isolated from the external environment, which avoids contamination of the brake components with dirt, water or other contaminates which are often present in working environments.

Optionally, the auxiliary brake comprises: a static brake plate carrier inside the wheel hub; a friction plate configured for rotation with the wheel driving element; a counter plate coupled to the brake plate carrier and fixed against rotation relative to the brake plate carrier, wherein the friction plate and counter plate are configured to slide in an axial direction relative to each other; and an auxiliary brake actuation means comprising an engaged state in which the friction plate and counter plate are urged in the axial direction into engagement with each other, and a disengaged state in which the friction plate and counter plate can slide freely relative to each other in the axial direction.

Such an auxiliary brake structure has been found to be a particularly suitable for working vehicles.

It will be understood that in this context the term "axial direction" refers to a direction which is parallel to a rotational axis of the wheel driving element and/or driveshaft.

It will also be understood that in the disengaged state of the auxiliary brake actuation means, the friction plate and counter plate may touch (i.e., engage) each other at times, due to being free to move relative to each other, but that they are not urged into engagement as in the engaged state.

Optionally, the auxiliary brake comprises first and second counter plates on either side of the friction plate.

Optionally, the auxiliary brake comprises: a plurality of friction plates configured for rotation with the wheel driving element and/or a plurality of counter plates coupled to the brake plate carrier and fixed against rotation relative to the brake plate carrier, wherein the friction plates and counter plates are configured to slide in an axial direction relative to each other; wherein the friction and counter plates are interspersed between each other; and wherein adjacent friction and counter plates are urged into engagement with each other when the auxiliary brake actuation means is in the engaged state, and adjacent friction and counter plates can slide freely relative to each other when the auxiliary brake actuation means is in the disengaged state.

Having a plurality of friction and/or counter plates may provide an increased braking capacity (i.e., increased auxiliary brake torque).

Optionally, the number of counter plates is one greater than the number of friction plates (i.e., so that a counter plate is provided at either end of the stack of counter and friction plates).

Optionally, the auxiliary brake comprises three or more friction plates. Optionally, the auxiliary brake comprises four or more friction plates.

Optionally, the auxiliary brake actuation means comprises a hydraulically or pneumatically actuated piston.

Such a piston provides a simple means of urging the friction and counter plates into engagement in the engaged state.

Optionally, the auxiliary brake actuation means comprises a biasing member configured to bias the piston towards a retracted state corresponding to the disengaged state of the auxiliary brake actuation means.

Such a biasing member reduces the chances of the piston dragging against the counter and/or friction plates when the auxiliary brake actuation means is in the disengaged state.

Optionally, wherein the biasing member comprises a disc spring.

Having a disc spring instead of an alternative biasing member (e.g., one or more coil springs) provides a more simple and compact arrangement, since a single disc spring may be used to provide a sufficient force to keep the piston retracted (e.g., in comparison to several circumferentially distributed coil springs in known arrangements).

Optionally, the service brake comprises a wet brake.

In other words, the service brake is enclosed within a fluid-filled portion of the casing. Wet brakes are particularly suitable for working vehicles because the surrounding fluid can both lubricate and cool the brake components which extends the lifetime of the braking components. The fluid inside the wet brakes may also enhance friction and noise characteristics of the brake. Furthermore, wet brakes are isolated from the external environment, which avoids contamination of the brake components with dirt, water or other contaminates which are often present in working environments.

Optionally, the service brake comprises: a static brake plate carrier inside the casing of the axle; a friction plate configured for rotation with the driveshaft; a counter plate coupled to the brake plate carrier and fixed against rotation relative to the brake plate carrier, wherein the friction plate and counter plate are configured to slide in an axial direction relative to each other; and a service brake actuation means comprising an engaged state in which the friction plate and counter plate are urged in the axial direction into engagement with each other, and a disengaged state in which the friction plate and counter plate can slide freely relative to each other in the axial direction.

It will be understood that in this context the term "axial direction" refers to a direction which is parallel to a rotational axis of the wheel driving element and/or driveshaft.

It will also be understood that in the disengaged state of the service brake actuation means, the friction plate and counter plate may touch (i.e., engage) each other at times, due to being free to move relative to each other, but that they are not urged into engagement as in the engaged state.

Optionally, the service brake comprises: a plurality of friction plates configured for rotation with the driveshaft; and a plurality of counter plates coupled to the brake plate carrier and fixed against rotation relative to the brake plate carrier, wherein the friction plates and counter plates are configured to slide in an axial direction relative to each other; wherein the friction plates are interspersed between the counter plates; and wherein adjacent friction plates and counter plates are urged into engagement with each other when the service brake actuation means is in the engaged state, and adjacent friction plates and counter plates can slide freely relative to each other when the service brake actuation means is in the disengaged state.

Having a plurality of friction and counter plates may provide an increased braking capacity (i.e., increased service brake torque).

Optionally, the service brake actuation means comprises a hydraulically or pneumatically actuated piston.

Such a piston provides a simple means of urging the friction and counter plates into engagement in the engaged state.

Optionally, the service brake actuation means comprises a biasing member configured to bias the piston towards a retracted state corresponding to the disengaged state of the service brake actuation means.

Such a biasing member reduces the chances of the piston dragging against the counter and/or friction plates when the service brake actuation means is in the disengaged state.

Optionally, the biasing member comprises one or more coil springs.

By having one or more coil springs (e.g., several circumferentially distributed coil springs), a suitable biasing force can be produced (e.g., by selecting a suitable number and/or size of coil springs).

Optionally, the biasing member comprises a disc spring.

Having a disc spring instead of an alternative biasing member (e.g., one or more coil springs) provides a more simple and compact arrangement, since a single disc spring may be used to provide a sufficient force to keep the piston retracted (e.g., in comparison to several circumferentially distributed coil springs in known arrangements).

Optionally, the axle assembly comprises left and right wheel hubs located on opposite ends of the axle, each of the left and right wheel hubs comprising a wheel driving element which is coupled to a respective driveshaft, and wherein the brake system comprises left and right auxiliary brakes each being configured to apply a braking force to the respective wheel driving element.

Optionally, the brake system comprises left and right service brakes each being configured to apply a braking force to the respective driveshaft.

Optionally, each wheel driving element is coupled to the respective driveshaft by a gear arrangement.

In this way, braking forces can be provided by auxiliary brakes, and optionally service brakes, on both left and right sides of the axle, which facilitates increased braking capacity and longevity of the braking system.

A further aspect of the teachings provides a drivetrain comprising a front axle assembly as disclosed herein and a rear axle assembly as disclosed herein.

In this way, braking forces can be provided by service and auxiliary brakes on both front and rear axle assemblies, which facilitates increased braking capacity and longevity of the braking system.

A further aspect of the teachings provides a working vehicle comprising an axle assembly as disclosed herein, and/or the drivetrain as disclosed herein, a main body which is supported by the or each axle assembly, and a working arm which is movable relative to the main body to perform a work function.

Such a working vehicle benefits from the advantages of the axle assembly outlined above.

Optionally, the working vehicle is an excavator or a backhoe loader.

Excavators and backhoe loaders may be particularly prone to rocking/backlash in the gear arrangement between the driveshaft and wheel driving element. Therefore, the benefits of the axle assembly outlined above may be particularly beneficial for these types of working vehicle.

A further aspect of the teachings provides a method of controlling a brake system for a working vehicle, the method comprising:
determining whether the working vehicle is in a working mode or a travelling mode;
when it is determined that the working vehicle is in the travelling mode, receiving a service brake input and actuating a service brake to apply a braking force to a driveshaft of the working vehicle in response to the service brake input; and
when it is determined that the working vehicle is in the working mode, actuating an auxiliary brake to apply a braking force to a wheel driving element of a wheel hub of the working vehicle, and optionally actuating the service brake to apply a braking force to the driveshaft.

Such a method provides the benefits of increased braking capacity/thermal management associated with applying service brakes to a driveshaft, whilst mitigating the disadvantages of rocking/backlash between the wheel driving element and driveshaft by actuating the auxiliary brake in the working mode.

Optionally, the method further comprises determining whether the driveshaft and/or wheel driving element is stationary or rotating, and inhibiting application of the auxiliary brake when the driveshaft and/or wheel driving element is determined to be rotating.

Optionally, when it is determined that the driveshaft and/or wheel driving element is stationary, the method further comprises applying the auxiliary brake.

Optionally, when it is determined that the driveshaft and/or wheel driving element is stationary, the method further comprises continuing to inhibit application of the auxiliary brake until a predetermined amount of time has elapsed, optionally wherein the predetermined amount of time is at least 0.5 seconds.

In other words, the method inhibits "dynamic braking" with the auxiliary brake. It will be understood that dynamic braking produces more debris and heat than static braking, due to relative rotation between engaged brake components. Therefore, the method inhibiting dynamic braking with the auxiliary brake reduces build-up of debris and heat in the auxiliary brake, which extends the lifetime of the auxiliary brake.

A further aspect of the teachings provides a braking arrangement for a working vehicle. The braking arrangement comprises: a static brake plate carrier; a friction plate configured for rotation with a driveshaft or a wheel driving element of a wheel hub; a counter plate coupled to the brake plate carrier and fixed against rotation relative to the brake plate carrier, wherein the friction plate and counter plate are configured to slide in an axial direction relative to each other; an actuation means comprising an engaged state in which the friction plate and counter plate are urged in the axial direction into engagement with each other, and a disengaged state in which the friction plate and counter plate can slide freely relative to each other in the axial direction; and wherein the actuation means comprises a hydraulically or pneumatically actuated piston and a disc spring configured to bias the piston towards a retracted state corresponding to the disengaged state of the actuation means.

Having a disc spring configured to bias the piston towards the retracted state reduces the chances of the piston dragging against the counter and/or friction plates when the actuation means is in the disengaged state. In addition, using a disc spring instead of an alternative biasing member (e.g., a coil spring) provides a more simple and compact arrangement, since a single disc spring may be used to provide a sufficient force to keep the piston retracted (e.g., in comparison to several circumferentially distributed coil springs in known arrangements).

Optionally, the braking arrangement comprises a wet brake.

Optionally, the braking arrangement comprises a plurality of friction plates interspersed between a plurality of counter plates.

A further aspect of the teachings provides a working vehicle comprising a braking arrangement as disclosed herein.

Such a working vehicle benefits from the advantages of the braking arrangement outlined above.

Optionally, the working vehicle comprises a main body which is supported by one or more axle assemblies, and a working arm which is movable relative to the main body to perform a work function.

Optionally, the working vehicle is an excavator or a backhoe loader.

### BRIEF DESCRIPTION OF THE DRAWINGS

Figure 1 is a side view of a working vehicle according to an embodiment;
Figure 2 is a schematic view of an axle arrangement of the working vehicle of Figure 1;
Figure 3 is a cross-sectional view of an axle assembly of the axle arrangement of Figure 2;
Figure 4 is an enlarged cross-sectional view of a wheel hub of the axle assembly of Figure 3;
Figure 5 shows a conventional tang arrangement of the present disclosure;
Figures 6a and 6b show an end view and isometric view respectively of a tang design of the present disclosure; and,
Figure 7 is a flow chart of a method of controlling a brake system according to an embodiment.

### DETAILED DESCRIPTION

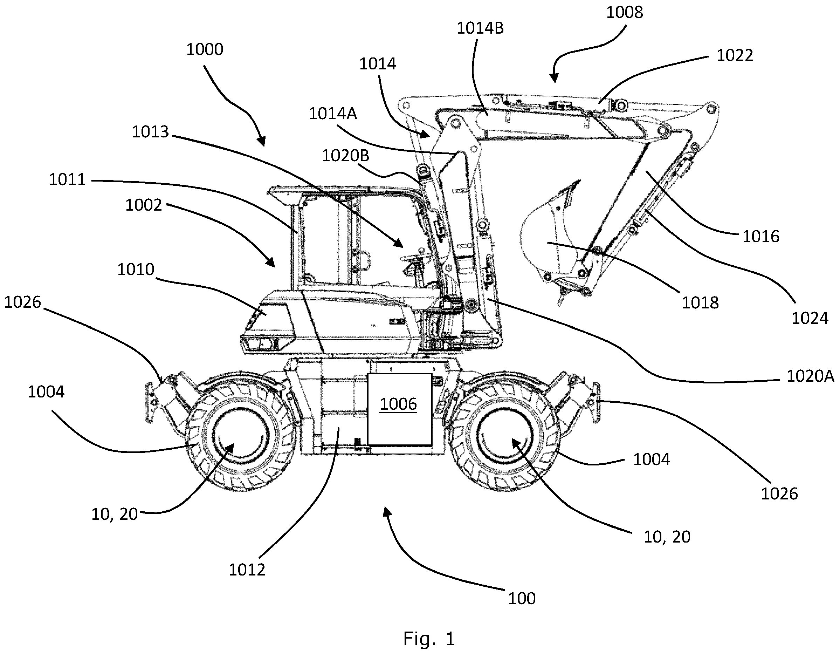

Referring firstly to Figure 1, a working vehicle is indicated at 1000. The working vehicle 1000 has a main body 1002 which is supported by one or more axle assemblies 10. In this embodiment, the working vehicle 1000 has a plurality of wheels 1004 which are coupled to wheel hubs 20 at outboard ends of the one or more axle assemblies 10. The working vehicle also has a prime mover 1006 (e.g., as shown schematically on Figure 1) which is coupled to the plurality of wheels 1004 via a drivetrain 100. In other words, the working vehicle 1000 can be driven in a travelling mode, in which the plurality of wheels 1004 are driven by the prime mover 1006 via the drivetrain 100. The prime mover 1006 may include an internal combustion engine (e.g., a diesel or hydrogen powered internal combustion engine), an electrical drive unit and/or any other suitable drive means.

The working vehicle 1000 also has a working arm 1008 which is movable relative to the main body 1002 to perform a work function. In other words, the working vehicle 1000 can be operated in a working mode in which the working arm 1008 is moved to perform a work function. It will be understood that the wheels 1004 will often remain static when the working vehicle 1000 is in the working mode (e.g., when excavating).

In the illustrated embodiment, the working vehicle 1000 is an excavator. In particular, the main body 1002 has a superstructure 1010 which is rotatably coupled to an undercarriage 1012. The working arm 1008 is coupled to the superstructure 1010, and the undercarriage 1012 is supported by the one or more axle assemblies 10. The superstructure 1010 has an operator cabin 1011 with one or more user inputs 1013 for controlling movement of the working vehicle 1000 and/or working arm 1008. In alternative embodiments, the working vehicle 1000 may be a backhoe loader or any other type of working vehicle.

The illustrated working arm 1008 has a boom arrangement 1014 which is pivotally coupled to the superstructure 1010, a dipper arm 1016 which is pivotally coupled to the boom arrangement 1014, and a work implement 1018 which is coupled (e.g., pivotally coupled) to a free end of the dipper arm 1016. In this embodiment, the work implement 1018 is a bucket (e.g., for digging), but other work implements, for example forks, may be used instead to perform other work functions. In other embodiments, only a single working arm may be provided.

In this embodiment, the boom arrangement 1014 is a two-piece boom arrangement consisting of first and second booms 1014A, 1014B which are pivotally coupled to each other. In alternative embodiments, the boom arrangement 1014 may be a mono-boom arrangement consisting of a single boom.

A plurality of actuators 1020A, 1020B, 1022, 1024 (e.g., hydraulic actuators) are provided to control movement of the working arm 1008. In particular, there are one or more boom actuators 1020A, 1020B for controlling movement of the boom arrangement 1014, a dipper actuator 1022 for controlling movement of the dipper arm 1016, and an implement actuator 1024 for controlling movement of the work implement 1018. In more detail, there is a first boom actuator 1020A for pivoting the first boom 1014A relative to the superstructure 1010 and a second boom actuator 1020B for pivoting the second boom 1014B relative to the first boom 1014A. The dipper actuator 1022 is configured to pivot the dipper arm 1016 relative to the boom arrangement 1014 (i.e., relative to the second boom 1014B) and the implement actuator 1024 is configured to pivot the work implement 1018 relative to the dipper arm 1016. A further actuator (not shown) may be provided to rotate the superstructure 1010 relative to the undercarriage 1012. The actuators 1020A, 1020B, 1022, 1024 may be driven by the prime mover 1006 and/or another source of power, such as a battery.

It will be understood that, when the working arm 1008 experiences deceleration or acceleration (e.g., when changing the movement direction of one or more portions of the working arm 1008), the main body 1002 of the working vehicle 1000 may experience reactive forces which may lead to rocking, tilting or other movement of the main body 1002, superstructure 1010 and working arm 1008. In order to increase stability of the working vehicle 1000, one or more stabilisers 1026 may be deployed.

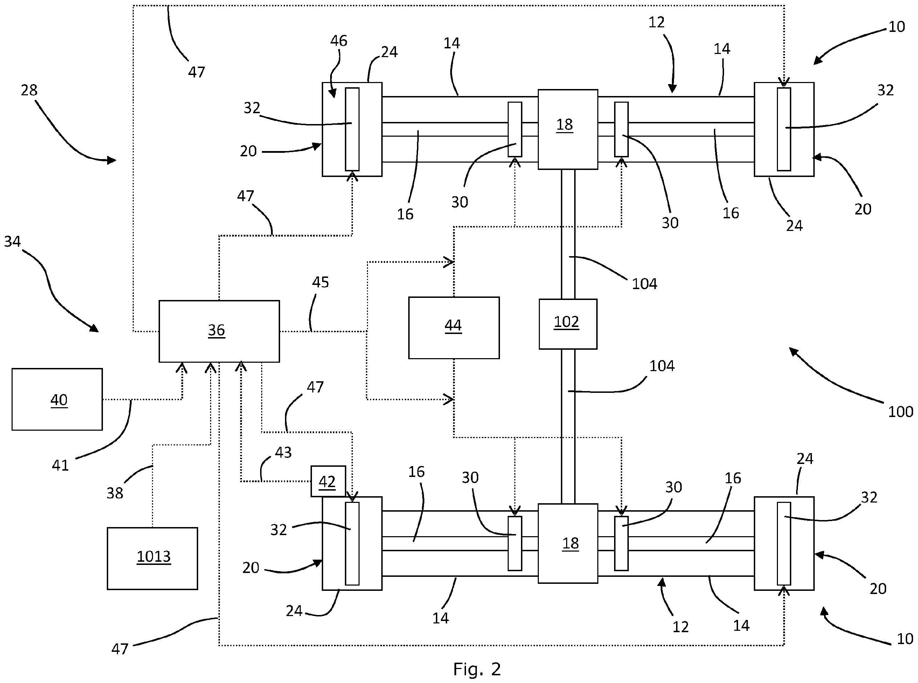

Referring now to Figure 2, the drivetrain 100 of the working vehicle is illustrated in more detail. The drivetrain 100 has a front axle assembly 10 and a rear axle assembly 10. In this embodiment, the drivetrain 100 also has a transfer case 102 which transfers power from a transmission (not shown) to the front and rear axle assemblies 10 via front and rear propeller shafts 104.

The front and rear axle assemblies 10 are of a similar construction, and so only one axle assembly 10 will be described in detail below.

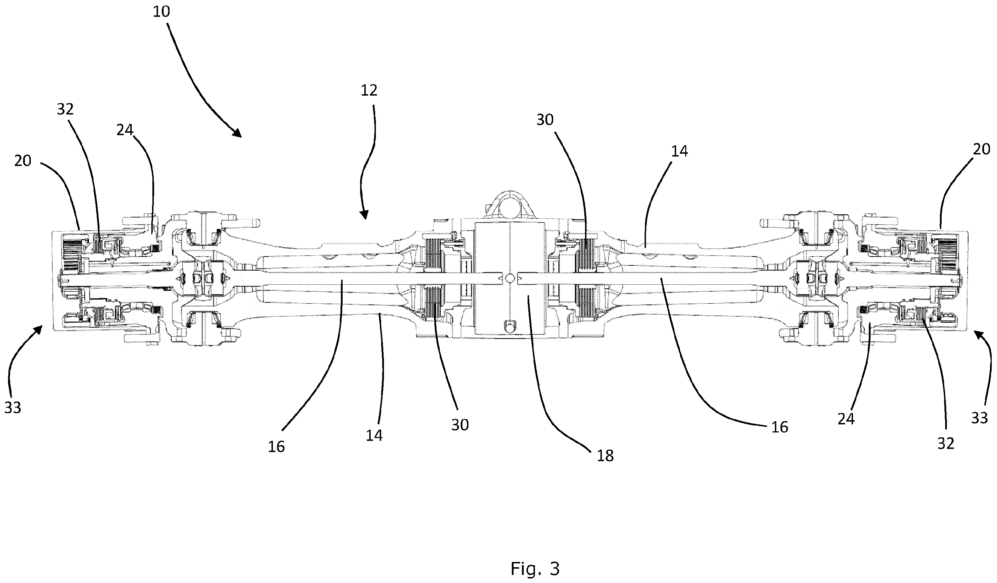

As illustrated schematically in Figure 2, and in more detail in Figure 3, the axle assembly 10 has an axle 12 which includes left and right casings 14. The axle 12 also has left and right driveshafts 16 located within the respective casings 14. A differential 18 is located in a centre of the axle 12 for transferring a drive input from the respective propeller shaft 104 to the left and right driveshafts 16.

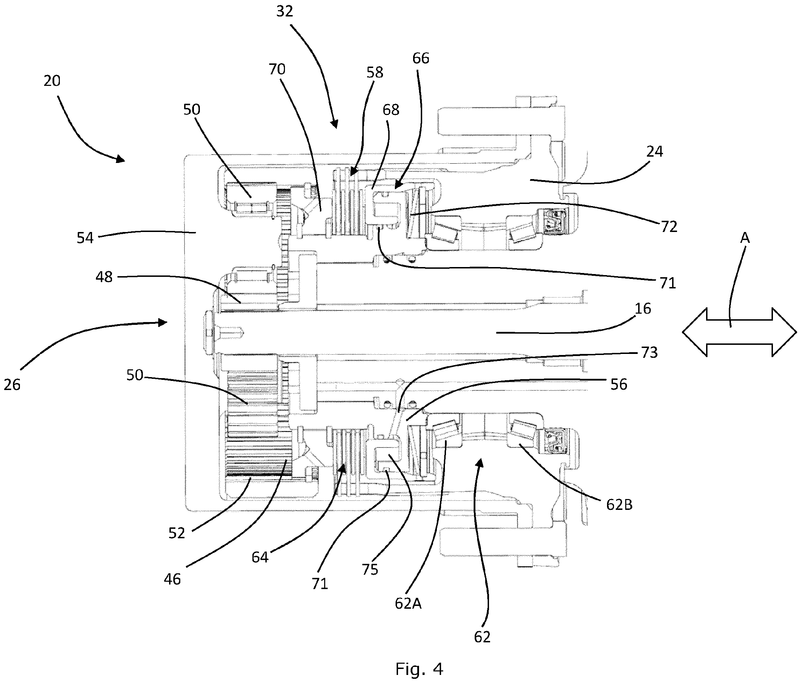

The axle assembly 10 also has left and right wheel hubs 20 located on opposite outboard ends 22 of the axle 12. The wheel hubs 20 are configured for mounting the wheels 1004 thereto. As shown in Figure 4, the left and right wheel hubs 20 each include a wheel driving element 24 which, in this embodiment, is coupled to the respective driveshaft 16 by a gear arrangement 26 (as will be described in more detail below). In other embodiments, the wheel driving element 24 may be directly coupled to the respective driveshaft 16 (i.e., with no gear arrangement, so that the wheel driving element 24 and driveshaft 16 rotate at the same speed).

The axle assembly 10 also includes a brake system 28. In the illustrated embodiment, the brake system 28 includes left and right service brakes 30 which are each configured to apply a braking force to the respective driveshaft 16, as well as left and right auxiliary brakes 32 which are each configured to apply a braking force to the respective wheel driving element 24.

Such a brake system 28 may provide benefits of high brake capacity/thermal management associated with applying service brakes 30 to driveshafts 16 during dynamic braking, whilst mitigating disadvantages of rocking/backlash during static braking through use of the auxiliary brakes 32.

The left and right sides of the axle assembly 10 are of similar construction (e.g., the axle assembly 10 is symmetrical about a mid-point of the axle assembly 10), and so only one side of the axle assembly 10 will be described in detail below. In particular, references below to "the service brake 30" may be considered as references to one or more of the service brakes 30. Similarly, references to "the auxiliary brake 32" may be considered as references to one or more of the auxiliary brakes 32. Similarly, references to "the wheel hub 20" may be considered as references to one or more of the wheel hubs 20.

In the illustrated embodiment, the service brake 30 is positioned inboard of the auxiliary brake 32. In other words, the axle assembly 10 has an outboard end 33, and the auxiliary brake 32 is located between the service brake 30 and the outboard end 33 of the axle assembly 10. Put another way, the service brake 30 is applied to an inboard portion of the driveshaft 16 (e.g., a portion of the driveshaft proximal the differential 18). Applying the service brake 30 to an inboard portion of the driveshaft 16 (where the axle casing 14 typically has a greater internal volume and is close to lubricated components such as the differential 18 or other transmission components) facilitates increased sizing/number of service brake components to increase brake capacity. Further, this facilitates improved thermal management of the service brake 30 using a greater volume of cooling fluids inside such an inboard portion of the casing 14.

As best illustrated in Figure 2, the brake system 28 has a control system 34 which is configured to apply the service brake 30 and/or auxiliary brake 32. In particular, the control system 34 includes a controller 36 which receives one or more inputs 38, 41, 43 and, in response to the one or more inputs 38, 41, 43, issues one or more outputs 45, 47 to actuate the service brake 30 and/or auxiliary brake 32.

In some embodiments, the control system 34 is configured to apply the auxiliary brake 32 when the working vehicle 1000 is in the working mode. In particular, the control system 34 may include a working mode input 38 which is indicative of a desire to actuate the working arm 1004, and the control system 34 (e.g., the controller 36) may be configured to determine that the working vehicle 1000 is in the working mode in response to activation of the working mode input 38. The working mode input 38 may be provided by a button, switch, touchscreen or other user-selectable input 1013 located within the operator cabin 1011 of the working vehicle 1000. In some embodiments, the working mode input 38 may include a sensor which automatically identifies a desire to actuate the working arm 1004 without having to be manually operated by a user. For example, the working mode input 38 may be a sensor which identifies when a chair in the operator cabin is moved to a working position, when a user operates a control lever for the working arm, etc. In alternative embodiments, the control system 34 may be configured to determine that the working vehicle 100 is in the working mode via an alternative means (e.g., by monitoring a rotation speed of the propeller shafts 104, driveshafts 16 and/or wheel driving elements 24 and determining when the rotation speed is zero, or by monitoring actuation of the one or more working arm actuators 1020A, 1020B, 1022, 1024 of the working vehicle 1000).

In some embodiments, the control system 34 is also configured to apply the service brake 30 when the working vehicle 1000 is in the working mode. In this way, the total static braking force is the sum of the service brake torque of the service brake 30 and the auxiliary brake torque of the auxiliary brake 32, which is greater than the auxiliary brake torque alone. Furthermore, if the auxiliary brake 32 slips while the working vehicle 1000 is in the working mode (e.g., due to large forces produces by ground-engaging operations such as digging with the working arm 1004), because the service brake 30 is applied to the driveshaft 16, the wheel driving element 24 will be inhibited by the service brake 30 from moving more than is permitted by backlash in the gear arrangement 26 (e.g., 1 to 2 degrees) and/or torsional movement of the driveshaft 16.

In some embodiments, the control system 34 is configured to determine whether the driveshaft 16 and/or wheel driving element 24 is stationary or rotating, and to inhibit application of the auxiliary brake 32 when determined to be rotating. In other words, the control system 34 may be configured to inhibit "dynamic braking" with the auxiliary brake 32. This may reduce build-up of debris and heat in the auxiliary brake 32, which extends the lifetime of the auxiliary brake 32.

In some embodiments, when the driveshaft 16 and/or wheel driving element 24 is determined to be stationary, the control system 34 is configured to continue to inhibit application of the auxiliary brake 32 until a predetermined amount of time has elapsed. For example, the predetermined amount of time is at least 0.5 seconds. This may further safeguard against dynamic braking with the auxiliary brake 32, by ensuring that the auxiliary brake 32 is not applied prematurely (e.g., momentarily when the driveshaft 16 and/or wheel driving element 24 is stationary when switching between forwards and reverse driving of the associated working vehicle 1000).

In some embodiments, when the driveshaft 16 and/or wheel driving element 24 is determined to be stationary (and optionally when the predetermined amount of time has elapsed), the control system 34 is configured to apply the auxiliary brake 32 (i.e., rather than only stopping inhibiting actuation of the auxiliary brake 32, but requiring a manual step to apply the auxiliary brake 32). This may be useful for increasing braking capacity and/or inhibiting rocking, for example, when the working vehicle 1000 is temporarily stationary whilst in a travelling mode (e.g., when waiting at traffic lights).

In order to determine whether the driveshaft 16 and/or wheel driving element 24 is stationary or rotating, the control system 34 may have one or more speed sensors 42 (shown schematically on Figure 2). The one or more speed sensors 42 may include: speedometers, encoders, GPS sensors, or any other suitable speed sensor. The one or more speed sensors 42 may send one or more speed signal inputs 43 to the controller 36. The control system 34 may directly determine whether the driveshaft 16 and/or wheel driving element 24 are stationary or rotating from the one or more speed signal inputs 43 (e.g., the one or more speed sensors 42 may output one or more speed signal inputs 43 which are indicative of a rotational speed of the driveshaft 16 and/or wheel driving element 24). Alternatively, the control system 34 may indirectly determine whether the driveshaft 16 and/or wheel driving element 24 are stationary or rotating using the one or more speed signal inputs 43 (e.g., the one or more speed sensors 42 may output one or more speed signal inputs 43 indicative of a linear speed of the working vehicle 1000 and the control system 34 may determine that the driveshaft 16 and/or wheel driving element 24 are stationary when the linear speed is zero).

As illustrated in Figure 2, the braking system 28 has a service brake input 44 for applying the service brake 30. The service brake input 44 may be a brake pedal or lever in the operator cabin 1011 of the working vehicle 1000. This allows an operator to manually control operation of the service brake 30 (e.g., when wanting to decelerate the working vehicle 1000 when in the travelling mode). In the illustrated embodiment, the service brake input 44 is directly linked to the service brake 30 (e.g., via a mechanical, hydraulic, pneumatic or other physical connection). In other embodiments, the service brake input 44 may send an input signal to the controller 36 which may then set an output to actuate the service brake 30 (e.g., via a "brake-by-wire" arrangement).

The service brake 30 is configured to apply a service brake torque to the driveshaft 16. When the service brake 30 is applied at maximum force (e.g., at maximum pressure for a hydraulic or pneumatic brake), the service brake torque applied to the driveshaft 16 will be the maximum service brake toque. When the service brake 30 is applied at a lower force (e.g., at a pressure less than the maximum pressure for a hydraulic or pneumatic brake), the service brake torque applied to the driveshaft 16 may be lower than the maximum service brake torque. For example, such a lower service brake torque may be applied by the service brake 30 when it is desired to slow, but not entirely stop, the working vehicle 1000 during the travelling mode.

The auxiliary brake 32 is configured to apply an auxiliary brake torque to the wheel driving element 24. When the auxiliary brake 32 is applied at maximum force (e.g., at maximum pressure for a hydraulic or pneumatic brake), the auxiliary brake torque applied to the wheel driving element 24 will be the maximum auxiliary brake torque. It will be understood that in embodiments where the auxiliary brake 32 is only applied by the control system 34 during static braking (i.e., when dynamic braking with the auxiliary brake 32 is inhibited), the auxiliary brake 32 may always be applied at the maximum brake torque.

In some embodiments, the maximum service brake torque may be greater than the maximum auxiliary brake torque. For example, the maximum auxiliary brake torque of each auxiliary brake 32 may be in the range of 2000 to 8000 Nm, optionally 3000 to 7000 Nm, optionally 4000 to 6000 Nm, and the maximum service brake torque of each service brake 30 may be greater than 8000 Nm, optionally greater than 10000 Nm, optionally greater than 12000 Nm. In one embodiment, the maximum auxiliary brake torque of each auxiliary brake 32 is 5600 Nm and the maximum service brake torque of each service brake 30 is 13000 Nm. This may allow the auxiliary brake 32 to be downsized to provide a more compact arrangement which can fit within the wheel hub 20 whilst still meeting the lower brake torque requirements of static braking (compared to the higher brake torque requirements of dynamic braking with the service brake 30).

It will be understood that, because each axle assembly 10 has a service brake 30 and auxiliary brake 32 on each side of the axle assembly 10, total braking torque at each axle assembly 10 will be spread over four separate brakes 30, 32. Similarly, because there are front and rear axle assemblies 10, total braking torque of the working vehicle 1000 will be spread over a total of eight separate brakes 30, 32. Put another way, the total service brake torque may be the sum of the service brake torque of each service brake 30, and the total auxiliary brake torque may be the sum of the auxiliary brake torque of each auxiliary brake 32.

In the illustrated embodiment, the auxiliary brake 32 is a wet brake. In other words, the auxiliary brake 32 is enclosed within a fluid-filled portion 46 of the wheel hub 20. Similarly, the service brake 30 is a wet brake. In other words, the service brake 30 is enclosed within a fluid-filled portion of the casing 14. It will be understood that wet brakes allow lubrication and cooling of the brake components which extends the lifetime of the braking components. The fluid inside the wet brakes may also enhance friction and noise characteristics of the brake. Furthermore, wet brakes are isolated from the external environment, which avoids contamination of the brake components with dirt, water or other contaminates which are often present in working environments. In other embodiments, the auxiliary brake 32 and/or service brake 30 may be a dry brake (e.g., not enclosed within a fluid-filled chamber).

In the illustrated embodiment, the service brake 30 is applied to an inboard portion of the driveshaft 16. For example, the service brake 30 is located proximal to the differential 18. It will be understood that the axle casing 14 may have a greater internal volume and be located proximal to lubricated components such as the differential or other transmission components), and therefore positioning the service brake 30 here facilitates increased sizing/number of brake components to increase brake capacity. Further, this facilitates improved thermal management using cooling fluids inside the casing 14. In alternative embodiments, the service brake 30 is applied to an outboard portion of the driveshaft 16 (e.g., a portion of the driveshaft 16 inside or proximal to the wheel hub 20), or a central portion of the driveshaft 16 (e.g., between the inboard and outboard ends).

Referring now to Figure 4, the construction of the wheel hub 20 and auxiliary brake 32 is shown in more detail.

As mentioned above, the wheel hub 20 has a wheel driving element 24 which, in this embodiment, is coupled to the driveshaft 16 by a gear arrangement 26. In the illustrated embodiment, the gear arrangement 26 is a planetary gear arrangement, which includes a sun gear 48, a plurality of planet gears 50, a ring gear 52, and a planetary carrier 54.

In the illustrated embodiment, the sun gear 48 is coupled to the driveshaft 16 for co-rotation with the driveshaft 16, the ring gear 52 is held stationary within the wheel hub 20 (e.g., via a splined connection with stop 70 described below), and the planetary carrier 54 is free to rotate. In this way, as the sun gear 48 rotates, the plurality of planet gears 50 move along an orbital path between the sun gear 48 and the ring gear 52, and the planetary carrier 54 is rotated by the orbital movement of the planetary gears 50. The planetary carrier 54 is fixed relative to the wheel driving element 24 so that rotation of the planetary carrier 54 is translated to rotation of the wheel driving element 24. In the illustrated embodiment, the planetary carrier 54 is bolted to the wheel driving element 24 so that the wheel driving element 24 rotates with the planetary carrier 54.

In alternative embodiments, the planetary carrier 54 is held stationary within the wheel hub 20, and the ring gear 52 is free to rotate. In such embodiments, the ring gear 52 may be fixed relative to the wheel driving element 24 so that rotation of the ring gear 52 is translated to rotation of the wheel driving element 24. For example, the ring gear 52 may be bolted to the wheel driving element 24 through a flange, in a similar manner to the planetary carrier 54 of the illustrated embodiment.

In alternative embodiments, the gear arrangement 26 may have any other suitable configuration, or the gear arrangement 26 may be omitted and the wheel driving element 24 may be directly coupled to the driveshaft 16.

In the illustrated embodiment, the auxiliary brake 32 has one or more friction plates 58 configured for rotation with the wheel driving element 24. In particular, the one or more friction plates 58 are coupled to the wheel driving element 24 for co-rotation with the wheel driving element 24. The one or more friction plates 58 are fixed against rotation relative to the wheel driving element 24.

The wheel driving element 24 is supported for rotation by a bearing arrangement 62 which, in this embodiment, includes first and second roller bearings 62A, 62B. In other words, the wheel driving element 24 is a wheel bearing carrier.

In other embodiments, the one or more friction plates 58 may be coupled directly to, and fixed against rotation relative to the planetary carrier 54 (e.g., the planetary carrier 54 may be the wheel driving element 24). In such embodiments, the planetary carrier 54 may be supported by a suitable bearing arrangement 62.

In the illustrated embodiment, the auxiliary brake 32 also has a static brake plate carrier 56 inside the wheel hub 20, and one or more counter plates 64 which are coupled to the brake plate carrier 56 and fixed against rotation relative to the brake plate carrier 56.

In the illustrated embodiment, there is a plurality of friction plates 58 interspersed between a plurality of counter plates 64. In particular, there are three friction plates 58 interspersed between four counter plates 64. In alternative embodiments, any other suitable number of friction plates 58 and counter plates 64 may be provided (e.g., a single friction plate 58, two friction plates 58, or four or more friction plates 58).

The one or more friction plates 58 and one or more counter plates 64 are configured to slide in an axial direction A relative to each other (i.e., in a direction which is parallel to a rotational axis of the wheel driving element 24 and/or driveshaft 16). In particular, although the friction plates 58 are fixed against rotation relative to the wheel driving element 24, they are free to slide relative to the wheel driving element 24 in the axial direction A. Similarly, although the one or more counter plates 64 are fixed against rotation relative to the brake plate carrier 56, they are free to slide relative to the brake plate carrier 56 in the axial direction A.

In embodiments where there is a single friction plate 58 and counter plate 64, one of these may be fixed against movement in the axial direction A and the other may be free to slide in the axial direction A. Alternatively, there may be a single friction plate 58, a counter plate 64 on each side of the friction plate 64, and the friction plate 58 and counter plates 64 may each be free to slide in the axial direction A.

The auxiliary brake 32 also has an auxiliary brake actuation means 66 which has an engaged state, in which the adjacent friction plate(s) 58 and counter plate(s) 64 are urged in the axial direction A into engagement with each other, and a disengaged state, in which the adjacent friction plate(s) 58 and counter plate(s) 64 can slide freely relative to each other in the axial direction A. It will be understood that in the disengaged state of the auxiliary brake actuation means 66, the friction plate(s) 58 and counter plate(s) 64 may touch (i.e., engage) each other at times, due to being free to move relative to each other, but that they are not urged into engagement as they are in the engaged state.

In the illustrated embodiment, the auxiliary brake actuation means 66 includes a hydraulically or pneumatically actuated piston 68. The auxiliary brake actuation means 66 also includes a stop 70 against which the friction plate(s) 58 and counter plate(s) 64 are pushed by the piston 68. In other words, the friction plate(s) 58 and counter plate(s) 64 are compressed between the piston 68 and the stop 70. In the illustrated embodiment, a chamber 75 is formed between piston 68 and the brake plate carrier 56. One or more seals 71 (e.g., two seals 71) are provided between the piston 68 and the brake plate carrier 56 to seal the chamber 75. A pressure port 73 is provided for input of pressurised fluid (e.g., air or oil) to the chamber 75. In this way, the piston 68 can be urged towards an extended state, which corresponds to the engaged state of the auxiliary brake actuation means 66, by inputting pressurised fluid into the chamber 75 via the pressure port 73.

In the illustrated embodiment, the auxiliary brake actuation means 66 also has a biasing member 72 which is configured to bias the piston 68 towards a retracted state. The retracted state of the piston 68 corresponds to the disengaged state of the auxiliary brake actuation means 66. Such a biasing member reduces the chances of the friction plate(s) 58 and counter plate(s) 64 dragging, which may increase fuel efficiency.

In this embodiment, the biasing member 72 is a disc spring. In alternative embodiments, the biasing member 72 may be one or more coil springs (e.g., a plurality of coil springs distributed around a circumference of the piston 68).

In alternative embodiments, the biasing member 72 may be omitted. In such embodiments, the piston 68 may be permitted to passively move back to the retracted state by reducing the hydraulic or pneumatic pressure applied to the piston 68 (i.e., by reducing pressure inside the chamber 75). It will be understood that the seals 71 may deform when the piston 68 is moved from the retracted state to the extended state. It will also be understood that, in embodiments without a biasing member 72, this seal deformation may urge the piston 68 back to the retracted state when pressure in the chamber 75 is reduced, due to the seals 71 resiliently returning to their non-deformed shape.

In embodiments where the service brake 30 is a wet brake, the service brake 30 may have a similar construction to the auxiliary brake 32 outlined above. However, the one or more friction plates 58 may be configured for rotation with the driveshaft 16 and the one or more counter plates 64 may be coupled to, and fixed against rotation relative to a static brake plate carrier 56 inside the casing 14 of the axle 12.

Otherwise, the structure of the service brake 30 may be similar to the auxiliary brake 32 described above. For example, the friction plate(s) 58 and counter plate(s) 64 may be free to slide in the axial direction A relative to each other. There may be a plurality of friction plates 58 and counter plates 64. The service brake 30 may include a service brake actuation means comprising an engaged state in which the friction plate(s) 58 and counter plate(s) 64 are urged in the axial direction A into engagement with each other, and a disengaged state in which the friction plate(s) 58 and counter plate(s) 64 can slide freely relative to each other in the axial direction A. The service brake actuation mechanism may include a hydraulically or pneumatically actuated piston 68, a corresponding stop 70 and, optionally, a biasing member 72 (e.g., a disc spring) configured to bias the piston 68 towards a retracted state.

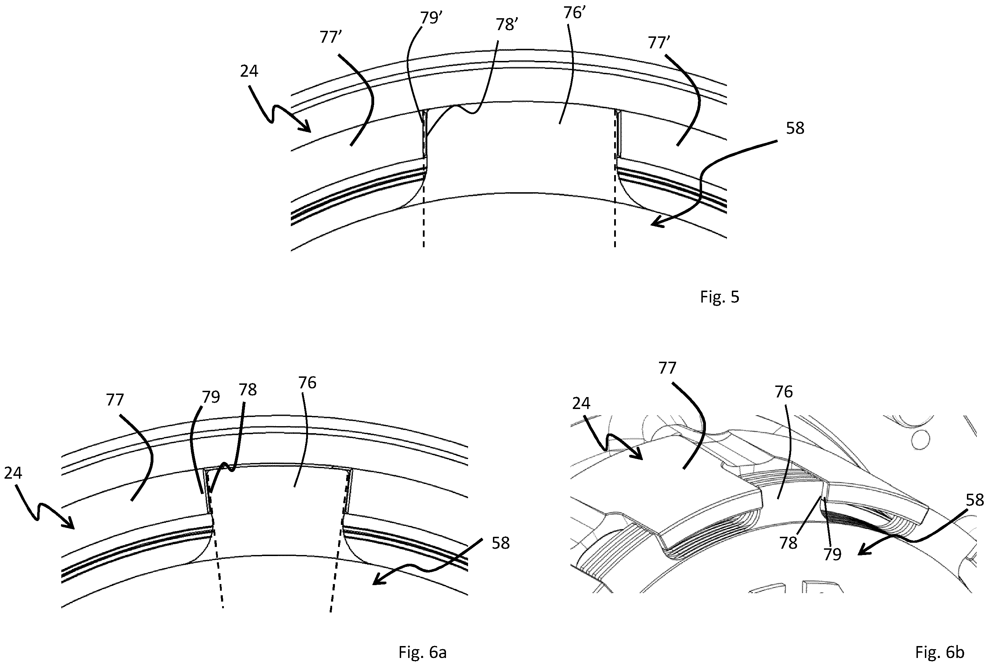

Figures 5, 6a and 6b show two variants of tangs 76, 76' provided on the circumferential edge the friction plates 58 and the engagement with the wheel driving element 24. Figure 5 shows a conventional tang, Figures 6a and 6b show a novel tang design.

The friction plates 58 include a plurality of circumferentially distributed tangs 76, 76' which extend radially outwards to be received within corresponding slots in the wheel driving element 24. The slots in the wheel driving element 24 are provided by circumferential spaced axially extending arcuate fingers 77, 77'. The edge surfaces of the tangs 76, 76' engage with edge surfaces of the fingers 77, 77' to prevent the relative rotational as described above.

In conventional friction plates 58 as shown in Figure 5, the opposing lateral edges 78' of the tangs 76' are parallel (as indicated by the dashed lines) to one another so that each tang 76' and the corresponding faces 79' of the wheel driving element fingers 77' can be machined more readily. This is because parallel faces on either side of the tang and fingers can be machined without changing the orientation of part or the cutting tool. However, the applicants have found that this conventional and commonplace parallel edged design can lead to increased wear of the wheel driving element fingers 77' and tangs which in turn leads to a small but perceptible increased rocking movement when excavating with the auxiliary brake engaged over time.

The increased wear is due to the tangential reaction between the tangs 76' and fingers 77' resulting in a radial component acting on the fingers 77' and forcing them radially outwards and inwards as the brake is repetitively loaded in use. The wear increased when the braking load constantly fluctuates as is the case in the illustrated embodiment when the brake is provided to prevent rocking during excavating.

In order to address this, as illustrated in Figures 6a and 6b, the present disclosure provides radially extending lateral edges 78 on the tangs 76 (as indicated by the dashed lines) and corresponding radially extending lateral edges 79 on the fingers 77. In doing so, the tangs 76 and fingers 77 react in a tangential direction thereby reducing or eliminating the radial component on the fingers 77. It will be appreciated that the term "radially extending lateral edges" may be taken to mean the edges substantially extend along a radial line which extends from the centre of the friction plates.

Although the illustrated embodiment relates to an auxiliary brake, it will be appreciated that the disclosure may be applied to a conventional friction plate in a brake or clutch arrangement.

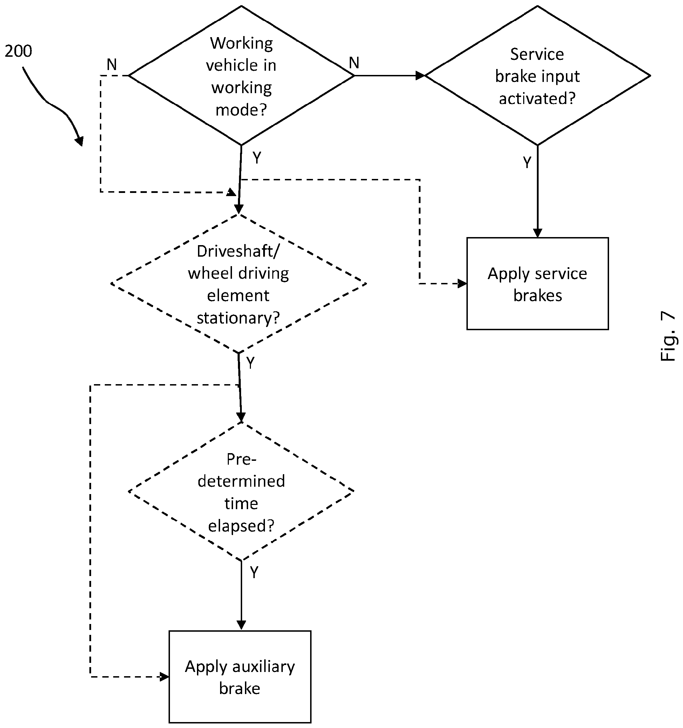

Referring now to Figure 7, a flow chart of a method of controlling a brake system for a working vehicle is indicated at 200.

The method includes a step of determining whether the working vehicle is in a working mode or a travelling mode. When it is determined that the working vehicle is in the travelling mode, the method may include the step of receiving a service brake input and actuating a service brake to apply a braking force to a driveshaft of the working vehicle in response to the service brake input. When it is determined that the working vehicle is in the working mode, the method may include the step of actuating an auxiliary brake to apply a braking force to a wheel driving element of a wheel hub of the working vehicle, and optionally actuating the service brake to apply a braking force to the driveshaft.

When it is determined that the working vehicle is in the working mode, the method may optionally include the step of determining whether the driveshaft and/or wheel driving element is stationary or rotating, and inhibiting application of the auxiliary brake when the driveshaft and/or wheel driving element is determined to be rotating. When it is determined that the driveshaft and/or wheel driving element is stationary, the method may optionally include the step of continuing to inhibit application of the auxiliary brake until a predetermined amount of time has elapsed (e.g., at least 0.5 seconds). In other words, the method may inhibit "dynamic braking" with the auxiliary brake, even if the working vehicle is determined to be in a working mode (e.g., via activation of a working mode input).

When it is determined that the working vehicle is in the travelling mode, the method may optionally include the step of determining whether the driveshaft and/or wheel driving element is stationary or rotating. When it is determined that the driveshaft and/or wheel driving element is stationary, the method may optionally include the step of applying the auxiliary brake (optionally, after the step of waiting until the predetermined amount of time has elapsed).

Although the method steps are shown in Figure 7 in a particular order, it will be understood that these steps may be carried out in any suitable order. Further, it will be understood that not all illustrated steps may be needed. For example, it may not be necessary to have a step of determining whether the working vehicle is in a working mode or a travelling mode. Instead, the decision to apply the auxiliary brakes may be based only on whether the driveshaft and/or wheel driving element is determined to be stationary (and optionally, after the step of waiting until the predetermined amount of time has elapsed).

Although the invention has been described in relation to one or more embodiments, it will be appreciated that various changes or modifications can be made without departing from the scope of the invention as defined in the appended claims.

It should also be noted that whilst the appended claims set out particular combinations of features described above, the scope of the present disclosure is not limited to the particular combinations hereafter claimed, but instead extends to encompass any combination of features herein disclosed.

## Claims

1. An axle assembly for a working vehicle, the axle assembly comprising:
an axle comprising a casing and a driveshaft located within the casing;
a wheel hub for mounting a wheel thereto, wherein the wheel hub is located at an outboard end of the axle and comprises a wheel driving element which is coupled to the driveshaft; and
a brake system comprising a service brake configured to apply a braking force to the driveshaft to decelerate the vehicle when travelling, and an auxiliary brake configured to apply a braking force to the wheel driving element when the working vehicle is static to inhibit rocking of the working vehicle when static.

2. The axle assembly of claim 1, wherein the wheel driving element is coupled to the driveshaft by a gear arrangement.

3. The axle assembly of claim 1 or 2, wherein the service brake is positioned inboard of the auxiliary brake.

4. The axle assembly of claim 3, wherein the driveshaft is coupled to a differential, and wherein the service brake is positioned proximal to the differential.

5. The axle assembly of any preceding claim, wherein the auxiliary brake comprises a wet brake.

6. The axle assembly of claim 5, wherein the auxiliary brake comprises:
a static brake plate carrier inside the wheel hub;
a friction plate configured for rotation with the wheel driving element;
a counter plate coupled to the brake plate carrier and fixed against rotation relative to the brake plate carrier, wherein the friction plate and counter plate are configured to slide in an axial direction relative to each other; and
an auxiliary brake actuation means comprising an engaged state in which the friction plate and counter plate are urged in the axial direction into engagement with each other, and a disengaged state in which the friction plate and counter plate can slide freely relative to each other in the axial direction.

7. The axle assembly of claim 6, wherein the auxiliary brake comprises:
a plurality of friction plates configured for rotation with the wheel driving element and/or a plurality of counter plates coupled to the brake plate carrier and fixed against rotation relative to the brake plate carrier, wherein the friction plates and counter plates are configured to slide in an axial direction relative to each other;
wherein the friction and counter plates are interspersed between each other; and
wherein adjacent friction and counter plates are urged into engagement with each other when the auxiliary brake actuation means is in the engaged state, and adjacent friction and counter plates can slide freely relative to each other when the auxiliary brake actuation means is in the disengaged state.

8. The axle assembly of claims 6 or 7, wherein the friction plates comprise a circular plate having a plurality of circumferentially distributed tangs extending radially from an edge thereof, the tangs being received within corresponding slots defined by axially extending fingers of the wheel driving element, wherein the tangs comprise lateral edges which engage with corresponding lateral edges of the fingers, and wherein the lateral edges of the tangs extend along a radial line which extends from the centre of the friction plates.

9. The axle assembly of any preceding claim, wherein the axle assembly comprises left and right wheel hubs located on opposite ends of the axle, each of the left and right wheel hubs comprising a wheel driving element which is coupled to a respective driveshaft, and wherein the brake system comprises left and right auxiliary brakes each being configured to apply a braking force to the respective wheel driving element; optionally, wherein the brake system comprises left and right service brakes each being configured to apply a braking force to the respective driveshaft; and/or optionally, wherein each wheel driving element is coupled to the respective driveshaft by a gear arrangement.

10. A wheeled excavator comprising a ground engaging structure comprising the axle assembly of any preceding claim, a main body which is supported by the or each axle assembly, and a working arm which is movable relative to the main body to perform a work function, the wheeled excavator further comprising a control system configured to apply the auxiliary brake.

11. The wheeled excavator of claim 10, wherein the control system is configured to apply the auxiliary brake when the working vehicle is in a working mode; optionally, wherein the control system comprises a working mode input indicative of a desire to actuate a working arm of the working vehicle, and wherein the control system is configured to determine that the working vehicle is in the working mode in response to activation of the working mode input; optionally, wherein the working mode input comprises a button, switch, touchscreen or other user-selectable input located within an operator cabin of a working vehicle.

12. The wheeled excavator of claim 11, wherein the control system is configured to apply the service brake when the working vehicle is in the working mode.

13. The wheeled excavator of any of claims 10, wherein the control system is configured to determine whether the driveshaft and/or wheel driving element is stationary or rotating, and wherein the control system is configured to inhibit application of the auxiliary brake when the driveshaft and/or wheel driving element is rotating; optionally, wherein, when the driveshaft and/or wheel driving element is determined to be stationary, the control system is configured to continue to inhibit application of the auxiliary brake until a predetermined amount of time has elapsed; optionally, wherein the predetermined amount of time is at least 0.5 seconds.

14. The wheeled excavator of claim 12 or 13, wherein, when the driveshaft and/or wheel driving element is determined to be stationary, the control system is configured to apply the auxiliary brake.

15. A method of controlling a brake system for a working vehicle, the method comprising:
determining whether the working vehicle is in a working mode or a travelling mode;
when it is determined that the working vehicle is in the travelling mode, receiving a service brake input and actuating a service brake to apply a braking force to a driveshaft of the working vehicle in response to the service brake input; and
when it is determined that the working vehicle is in the working mode, actuating an auxiliary brake to apply a braking force to a wheel driving element of a wheel hub of the working vehicle, wherein the auxiliary brake is only applied when the working vehicle is stationary and, optionally actuating the service brake to apply a braking force to the driveshaft.
